# EUROPÄISCHE PATENTSCHRIFT

(11) **EP 1 503 215 B1**
(45) Veröffentlichungstag und Bekanntmachung des Hinweises auf die Patenterteilung: **24.03.2010**
(21) Anmeldenummer: 04090179.5
(22) Anmeldetag: 06.05.2004
(51) Int. Cl.: G01P 3/487, G01D 5/14, G01D 5/16, C09J 5/00

(54) **Tragring für einen magnetischen Drehgeber**
Support ring for a magnetic angular encoder
Anneau de support pour un codeur angulaire magnétique

(30) Priorität: 26.07.2003 DE 10334735
(43) Veröffentlichungstag der Anmeldung: 02.02.2005
(73) Patentinhaber: Baumer Hübner GmbH, 10967 Berlin (DE)
(72) Erfinder: Wilhelmy, Lothar, 14195 Berlin (DE); Hiller, Bernhard, 13465 Berlin (DE)
(74) Vertreter: Böning, Manfred

(56) Entgegenhaltungen:
- EP-A- 0 390 261
- DE-A- 19 856 493
- US-A- 6 113 276
- PATENT ABSTRACTS OF JAPAN Bd. 015, Nr. 443 (M-1178), 12. November 1991 (1991-11-12) -& JP 03 189127 A (TOKICO LTD), 19. August 1991 (1991-08-19)

## Beschreibung

Die Erfindung betrifft einen Tragring für einen magnetischen Drehgeber mit mindestens einem durch einen Kleber mit dem Umfang des Ringes verbundenen, abwechselnd nord-süd-gepolten Magnetband.

Bekannt ist ein derartiger Tragring, auf den von einer Seite ein ringförmiges Magnetband der beispielsweise aus der DE 198 56 493 C2 bekannten Art geschoben ist, dessen Endposition durch einen einer Kante des Magnetbandes zugeordneten Anschlagbund des Tragringes bestimmt wird.

Der bekannte Tragring vermag insofern nicht voll zu befriedigen, als beim Aufschieben des Magnetbandes auf den Tragring die Vorderkante des Magnetbandes eine mehr oder weniger große Menge des Klebers vor sich herschiebt und keine Gewähr für die Bildung einer gleichmäßigen Klebstoffschicht zwischen dem Magnetband und dem Tragring gegeben ist.

Die Schrift US-A-6113 276 offenbart eine Drehgeber-Trägerstruktur mit einer Nut, welche so ausgebildet ist, dass sie zur Aufnahme, zum Befestigen mittels Kleber und als Führungskanal für ein Drehgeber-Magnetband dient.

Der Erfindung liegt die Aufgabe zugrunde, einen Tragring der in Betracht gezogenen Gattung so umzugestalten, dass die Art der Montage keine Beeinträchtigung der Gleichmäßigkeit der Klebestoffschicht mit sich bringt und dass zudem durch beiden Kanten des Magnetbandes zugeordnete Anschläge eine sicherere Positionierung des Magnetbandes erreicht wird.

Gelöst wird die vorstehende Aufgabe erfindungsgemäß dadurch, dass der Tragring mit mindestens einer zur Aufnahme des Magnetbandes dienenden mehrstufigen Nut versehen ist, deren unterste Stufe eine Sammelrinne für überschüssigen Kleber bildet und deren sich an die unterste Stufe anschließende Stufe einen Führungskanal für das Magnetband formt.

Der Vorteil des erfindungsgemäßen Tragringes besteht u. a. darin, dass bei ihm das Magnetband während der Montage nicht tangential, sondern normal zur Klebstoffschicht bewegt wird und dass die beiderseitige Führung des Magnetbandes in einer Nut einen einwandfreien Sitz des Magnetbandes gewährleistet.

Als besonders vorteilhaft erweist es sich, wenn die Tiefe der den Führungskanal bildenden Stufe kleiner als die Höhe des Magnetbandes ist, dessen Außenfläche gegenüber der Umfangsfläche des Tragringes zum Zentrum des Tragringes versetzt ist. Dadurch, dass das Magnetband nicht über den Umfang des Tragringes vorsteht, ist es nicht nur gegen Beschädigungen geschützt, sondern lässt es sich auch besonders einfach zusätzlich durch ein Abdeckband gegenüber der Umgebung abdichten.

Weitere Merkmale und Einzelheiten ergeben sich aus den Unteransprüchen und der nachstehenden Beschreibung zweier in den beigefügten Zeichnungen dargestellter, bevorzugter Ausführungsformen der Erfindung.

Es zeigen:
- Fig. 1: den grundsätzlichen Aufbau eines Drehgebers mit einem Tragring für ein Magnetband
- Fig. 2: einen Schnitt längs der Linie II - II in Fig. 1
- Fig. 3: eine Einzelheit III in Fig. 2
- Fig. 4: einen dem Schnitt gemäß Fig. 2 entsprechenden Schnitt durch eine modifizierte Ausführungsform und
- Fig. 5: eine Einzelheit V in Fig. 4.

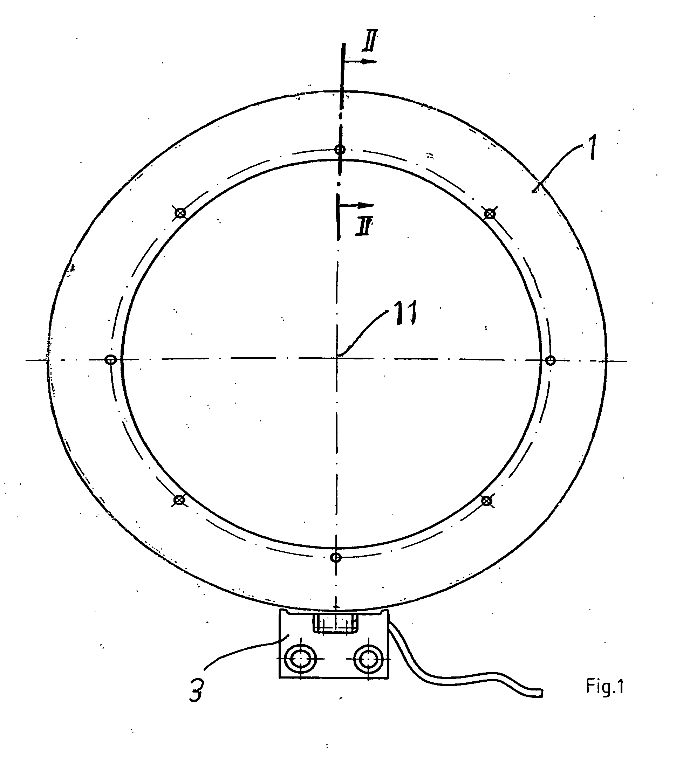

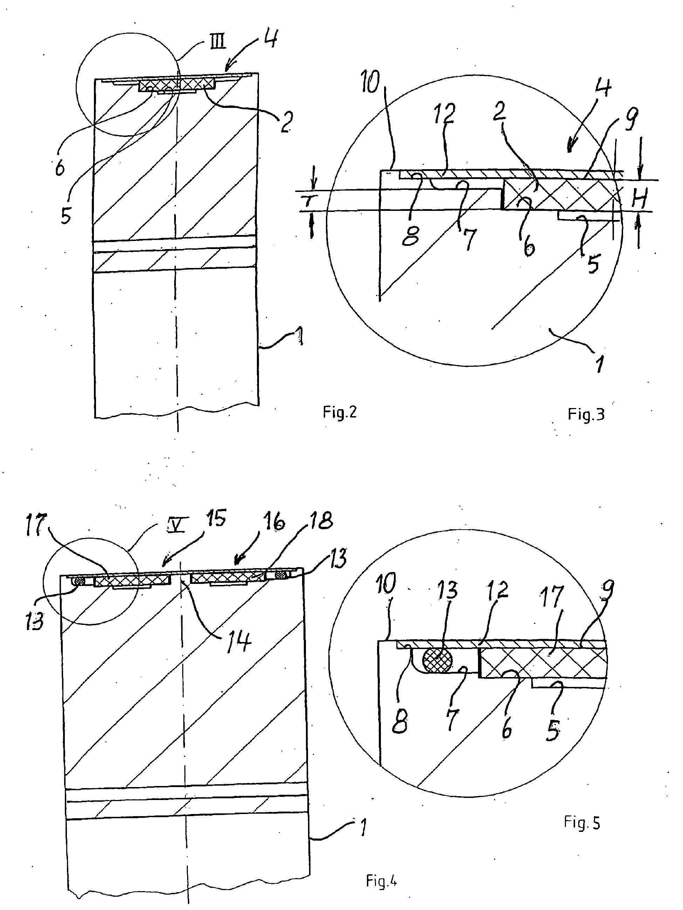

In Fig. 1 ist 1 ein an einer großdimensionierten Hohlwelle nach Art eines Schraubflansches befestigbarer Tragring, der im'Bereich seines Umfangs - wie aus Fig. 2 erkennbar - mit einem Magnetband 2 versehen ist, das abwechselnd nord-süd-gepolt magnetisiert ist. Das Magnetband 2 kann als geschlossener Ring oder aber als um den Tragring 1 legbarer Streifen ausgebildet sein, dessen Enden auf Stoß zusammengefügt sind. Das Magnetmuster wird durch einen Abtastkopf 3 abgetastet, der Magnetfeldsensible Sensoren aufweist.

Zur Aufnahme des Magnetbandes 2 dient eine allgemein mit 4 bezeichnete Nut, die mehrere Stufen 5, 6, 7 und 8 aufweist. Die unterste, zentrale Stufe 5 stellt eine Sammelrinne für einen Kleber dar, mit dem das Magnetband 2 am Boden der sich an die unterste Stufe 5 anschließenden Stufe 6 festgeklebt ist. Die Seitenwände der Stufe 6 dienen zur genauen Positionierung des Magnetbandes 2, dessen Außenfläche 9 gegenüber der Umfangsfläche 10 des Tragringes 1 zu dessen Zentrum 11 versetzt ist. Die Tiefe T der einen Führungskanal für das Magnetband 2 bildenden Stufe 6 ist kleiner als die Höhe H des Magnetbandes 2, so dass das Magnetband 2 über den Boden der Stufe 7 vorsteht. Der Überstand ist in den Fällen wichtig, in denen das Magnetband 2 erst im eingeklebten Zustand magnetisiert wird. Er ermöglicht nämlich einen guten Kontakt zwischen dem Magnetband und dem zur Magnetisierung verwendeten Magnetisierungskopf, da er die Gefahr von Berührungen zwischen dem Boden der Stufe 7 und dem Magnetisierungskopf ausschließt. Die Stufe 8 schließlich dient zur Aufnahme eines Abdeckbandes 12, das als Selbstklebeband ausgebildet ist und unter Temperatur- und Zugeinwirkung über den Umfang des Tragringes 1 und die Außenfläche 9 des Magnetbandes 2 gewickelt ist, wobei der Zwischenraum zwischen dem Boden der Stufe 7 und der Unterseite des Abdeckbandes 12 zur Aufnahme eines Dichtungsmaterials oder - wie in den Figuren 4 und 5 dargestellt - von O-Ringen 13 genutzt werden kann.

Aufgrund der beschriebenen Ausbildung des Tragringes 1 lässt sich dieser beispielsweise auch in einem Medium wie Öl einsetzen, das unter einem Druck von z. B. 10 bar steht und eine Temperatur von 90 und mehr Grad hat.

Bei der Ausführungsform gemäß den Figuren 4 und 5 ist der Tragring 1 im Bereich seines Umfanges mit einer Art Zwillingsnut ausgestattet, die aus zwei durch einen Ringsteg 14 voneinander getrennten mehrstufigen Nuten 15 und 16 besteht, deren Aufbau weitgehend dem Aufbau der Nut 4 entspricht. Der Ringsteg 14 trennt hier zwei magnetisierbare Bänder 17, 18, von denen das Band 17 beispielsweise eine inkrementelle und das Band 18 eine absolute Information trägt. Durch den Ringsteg 14 wird dabei ein magnetisches Übersprechen der Magnetbänder 17, 18 verhindert. Auch bei dieser Ausführungsform sind die Magnetbänder 17, 18 durch ein Abdeckband 12 gegen äußere Einflüsse geschützt, wobei beim Aufwickeln des Abdeckbandes auf den Tragring 1 die O-Ringe 13 unter Druck gesetzt werden, um eine einwandfreie Abdichtung zu erreichen.

## Patentansprüche

1. Tragring für einen magnetischen Drehgeber mit mindestens einem durch einen Kleber mit dem Umfang des Ringes verbundenen, abwechselnd nord-süd-gepolten Magnetband, **dadurch gekennzeichnet, dass** er mit mindestens einer zur Aufnahme des Magnetbandes (2; 17, 18) dienenden mehrstufigen Nut (4; 15, 16) versehen ist, deren unterste Stufe (5) eine Sammelrinne für überschüssigen Kleber bildet und deren sich an die unterste Stufe (5) anschließende Stufe (6) einen Führungskanal für das Magnetband (2; 17, 18) formt.

2. Tragring nach Anspruch 1, **dadurch gekennzeichnet, dass** die Tiefe (T) der den Führungskanal bildenden Stufe (6) kleiner als die Höhe (H) des Magnetbandes (2; 17, 18) ist, dessen Außenfläche (9) gegenüber der Umfangsfläche (10) des Tragringes (1) zum Zentrum (11) des Tragringes (1) versetzt ist.

3. Tragring nach Anspruch 1 oder 2, **dadurch gekennzeichnet, dass** das Magnetband (2; 17, 18) durch ein Abdeckband (12) gegen äußere Einflüsse geschützt ist.

4. Tragring nach Anspruch 3, **dadurch gekennzeichnet, dass** sich an die den Führungskanal für das Magnetband (2; 17, 18) bildende Stufe (6) zwei weitere Stufen (7, 8) anschließen, von denen die äußere zur Aufnahme des Abdeckbandes (12) dient.

5. Tragring nach Anspruch 4, **dadurch gekennzeichnet, dass** der Boden der zur Aufnahme des Abdeckbandes (12) dienenden Stufe (8) mit der Außenfläche (9) des Magnetbandes (2; 17, 18) fluchtet.

6. Tragring nach Anspruch 4 oder 5, **dadurch gekennzeichnet, dass** der Zwischenraum zwischen der auf die zur Aufnahme des Magnetbandes (2; 17, 18) dienenden Stufe (6) folgenden Stufe (7) und der zur Aufnahme des Abdeckbandes (12) dienenden Stufe (8) zur Aufnahme einer Dichtung nutzbar ist.

7. Tragring nach Anspruch 6, **dadurch gekennzeichnet, dass** die Dichtung von 0-Ringen (13) gebildet wird.

8. Tragring nach einem der Ansprüche 1 bis 7, **dadurch gekennzeichnet, dass** er zwei nebeneinander angeordnete, mehrstufige Nuten (17, 18) aufweist.

9. Tragring nach Anspruch 8, **dadurch gekennzeichnet, dass** zwischen den benachbarten Nuten (17, 18) ein Ringsteg (14) angeordnet ist, dessen Umfangsfläche mit dem Boden der zur Aufnahme des Abdeckbandes (12) dienenden Stufe (8) fluchtet.

## Claims

1. Support ring for a magnetic angular encoder with at least one magnetic tape which has alternating north and south poles and is connected to the circumference of the ring by an adhesive, **characterised in that** the support ring is provided with at least one multistage groove (4; 15, 16) which serves to receive the magnetic tape (2; 17, 18) and the bottom stage (5) of which forms a collecting gutter for excess adhesive and the stage (6) of which adjoining the bottom stage (5) forms a guide channel for the magnetic tape (2; 17, 18).

2. Support ring according to claim 1, **characterised in that** the depth (T) of the stage (6) forming the guide channel is less than the height (H) of the magnetic tape (2; 17, 18), the outer surface (9) of which is offset, in relation to the circumferential surface (10) of the support ring (1), from the centre (11) of the support ring (1).

3. Support ring according to claim 1 or 2, **characterised in that** the magnetic tape (2; 17, 18) is protected from external influences by a cover tape (12).

4. Support ring according to claim 3, **characterised in that** the stage (6) forming the guide channel for the magnetic tape (2; 17, 18) is adjoined by two further stages (7, 8), the outer of which serves to receive the cover tape (12).

5. Support ring according to claim 4, **characterised in that** the bottom of the stage (8) serving to receive the cover tape (12) is aligned with the outer surface (9) of the magnetic tape (2; 17, 18).

6. Support ring according to claim 4 or 5, **characterised in that** the intermediate space between the stage (7), following the stage (6) serving to receive the magnetic tape (2; 17, 18), and the stage (8) serving to receive the cover tape (12) can be used to receive a seal.

7. Support ring according to claim 6, **characterised in that** the seal is formed by O-rings (13).

8. Support ring according to one of claims 1 to 7, **characterised in that** it has two multistage grooves (17, 18) arranged next to each other.

9. Support ring according to claim 8, **characterised in that** an annular web (14), the circumferential surface of which is aligned with the bottom of the stage (8) serving to receive the cover tape (12), is arranged between the adjacent grooves (17, 18).

## Revendications

1. Anneau de support pour un capteur angulaire magnétique avec au moins une bande magnétique à polarité nord-sud alternée qui est reliée à la circonférence de l'anneau à l'aide d'une colle, **caractérisé en ce qu'**il est pourvu d'au moins une rainure étagée (4 ; 15, 16) qui sert à recevoir la bande magnétique (2 ; 17, 18), dont l'étage inférieur (5) forme une rigole collectrice pour l'excédent de colle et dont l'étage (6) qui fait suite à l'étage inférieur (5) forme un conduit de guidage pour la bande magnétique (2 ; 17, 18).

2. Anneau de support selon la revendication 1, **caractérisé en ce que** la profondeur (T) de l'étage (6) qui forme le conduit de guidage est inférieure à la hauteur (H) de la bande magnétique (2 ; 17, 18), dont la surface extérieure (9) est décalée par rapport à la surface circonférentielle (10) de l'anneau de support (1) en direction du centre (11) de celui-ci.

3. Anneau de support selon la revendication 1 ou 2, **caractérisé en ce que** la bande magnétique (2 ; 17, 18) est protégée des influences extérieures par une bande de recouvrement (12).

4. Anneau de support selon la revendication 3, **caractérisé en ce qu'**il est prévu, à la suite de l'étage (6) qui forme le conduit de guidage pour la bande magnétique (2 ; 17, 18), deux autres étages (7, 8), l'étage extérieur servant à recevoir la bande de recouvrement (12).

5. Anneau de support selon la revendication 4, **caractérisé en ce que** le fond de l'étage (8) qui sert à recevoir la bande de recouvrement (12) est dans l'alignement de la surface extérieure (9) de la bande magnétique (2 ; 17, 18).

6. Anneau de support selon la revendication 4 ou 5, **caractérisé en ce que** l'espace intermédiaire entre l'étage (7) qui suit l'étage (6) servant à recevoir la bande magnétique (2 ; 17, 18) et l'étage (8) qui sert à recevoir la bande de recouvrement (12) est utilisable pour recevoir un joint d'étanchéité.

7. Anneau de support selon la revendication 6, **caractérisé en ce que** le joint d'étanchéité est formé par des joints toriques (13).

8. Anneau de support selon l'une des revendications 1 à 7, **caractérisé en ce qu'**il présente deux rainures étagées (17, 18) qui sont disposées côte à côte.

9. Anneau de support selon la revendication 8, **caractérisé en ce qu'**il est prévu entre les rainures voisines (17, 18) une nervure annulaire (14) dont la surface circonférentielle est dans l'alignement du fond de l'étage (8) qui sert à recevoir la bande de recouvrement (12).
